# EUROPÄISCHE PATENTSCHRIFT

(11) **EP 1 092 972 B1**
(45) Veröffentlichungstag und Bekanntmachung des Hinweises auf die Patenterteilung: **18.08.2004**
(21) Anmeldenummer: 99119939.9
(22) Anmeldetag: 11.10.1999
(51) Int. Cl.: G01N 21/86, G01N 21/59, G01N 21/47, G01N 21/27, G06K 19/06, G03D 13/00

(54) **Vorrichtung zur automatischen Ausmessung von Messfeldern**
Apparatus for automatic measurements on measuring fields
Dispositif pour mesures automatiques de champs de mesure

(43) Veröffentlichungstag der Anmeldung: 18.04.2001
(60) Teilanmeldung: 02028016.0
(73) Patentinhaber: Gretag-Macbeth AG, 8105 Regensdorf (CH)
(72) Erfinder: Benz, Christian, 5424 Unterehrendingen (CH); Senn, Thomas, 8157 Dielsdorf (CH)
(74) Vertreter: Schwabe - Sandmair - Marx

(56) Entgegenhaltungen:
- EP-A- 0 228 347
- EP-A- 0 357 986
- EP-A- 0 509 520
- EP-A- 0 628 874
- EP-A- 0 837 320
- EP-A- 0 878 704
- US-A- 4 674 883
- US-A- 5 233 386
- US-A- 5 519 210

## Beschreibung

Die Erfindung betrifft eine Vorrichtung zur automatischen fotoelektrischen Ausmessung von auf einer blatt- oder streifenförmigen, opaken oder transparenten Vorlage vorhandenen Messfeldern gemäss dem Oberbegriff des unabhängigen Anspruchs 1.

Solche im allgemeinen als automatische Streifen-Lesegeräte (Automatic Strip Reader) bezeichnete Vorrichtungen werden u.a. in der fotografischen Industrie einerseits für die routinemässige Kontrolle der nasschemischen Anlagenteile und anderseits für die Überprüfung der Einstellungen des fotografischen Kopiergeräts (Printers) eingesetzt.

Zur Überprüfung der nasschemischen Anlagenteile, der Film- bzw. Papierentwicklungsbäder, werden entsprechende Filmchemie- bzw. Papierchemiestreifen ausgemessen. Diese Streifen sind bereits beim jeweiligen Film- bzw. Kopierpapierhersteller normiert belichtet worden und enthalten eine von Hersteller zu Hersteller unterschiedliche Anordnung von verschiedenen Messfeldern. Die Streifen werden beim Betreiber der nasschemischen Anlagen in mehr oder weniger regelmässigen Abständen in den jeweiligen Film- bzw. Papierentwicklungsanlagen entwickelt. Die entwikkelten Film- bzw. Papierstreifen werden mittels eines Handdensitometers oder dem erwähnten automatischen Streifen-Lesegerät fotometrisch ausgewertet, wobei die so ermittelten Messdaten mit den Sollangaben der Hersteller verglichen werden. In Abhängigkeit von den ermittelten Vergleichsergebnissen werden die Entwicklungsbäder aufgefrischt oder ergänzt, erneuert oder auch unverändert beibehalten. Zur Überprüfung der Einstellungen eines fotografischen Printers werden ein oder mehrere Standard-Negative auf Fotopapier aufbelichtet und dieses mit einer standardisierten und eingetesteten Chemie entwickelt. Die entwickelten Bilder werden wiederum fotometrisch ausgewertet und die dabei ermittelten Messdaten mit Sollangaben der Hersteller verglichen. In Abhängigkeit von den ermittelten Vergleichswerten können dann die Einstellungen des Printers korrigiert oder beibehalten werden. Nähere Details dazu und Beispiele für typische Messstreifen finden sich z.B. in der US-A-5 402 361 und der US-A-5 118 183.

Ein Streifenlesegerät der gattungsgemässen Art ist z.B. in der US-A-5 519 210 beschrieben. Es umfasst ein Gehäuse, an dessen Vorderseite ein Einzugspalt für einen auszumessenden Teststreifen - Film oder Papier - angeordnet ist. Im Inneren des Gehäuses befindet sich ein Transportsystem, um den durch den Einzugspalt zugeführten Teststreifen einzuziehen und längs einer Transportbahn vorzuschieben und dabei definiert zu führen. Im Bereich der Transportbahn ist eine densitometrische Messanordnung vorgesehen, welche sowohl im Transmissions- als auch im Remissionsbetrieb arbeiten kann, so dass gleichermassen transparente (Film) und opake (Papier) Teststreifen ausgemessen werden können. Die Messanordnung tastet während des Einzugs des Teststreifens in Transportrichtung hintereinander liegende Messfelder auf dem Teststreifen fotoelektrisch ab und übergibt die dabei gewonnenen elektrischen Signale an eine Steuerung, welche daraus digitale Messdaten berechnet, die die (Farb)Dichten der abgetasteten Messfelder auf dem Teststreifen repräsentieren. Für die Ausmessung von Teststreifen mit zweidimensionaler Anordnung von Messfeldern ist die densitometrische Messanordnung zusätzlich quer zur Transportrichtung des Teststreifens verstellbar, so dass die Abtastung nacheinander in mehreren parallelen Spuren erfolgen kann. Die Bewegungs- und Funktionsabläufe werden unter der Kontrolle der digitalen Steuerung durchgeführt. Ferner ist eine mit der Steuerung verbundene bi-direktionale Schnittstelle vorgesehen, über welche ein Datenaustausch mit einem externen Rechner erfolgen kann, wobei die erzeugten digitalen Messdaten der einzelnen Messfelder des Teststreifens an den externen Rechner übertragen werden können. Falls das Gerät autonom betreibbar sein soll, ist es noch mit einer geeigneten Bedienungstastatur und einer optischen Anzeigeeinrichtung versehen, welche mit der Steuerung verbunden sind und mit dieser zusammenwirken. Nach der Ausmessung der Messfelder wird der Teststreifen durch den Einzugspalt wieder ausgestossen.

Ein weiteres bekanntes Streifenlesegerät ist Gegenstand der US-A-5 402 361 und der US-A-5 118 183. Auch diese Geräte sind mit densitometrischen Messanordnungen für die fotoelektrische Ausmessung der auf den Kontrollstreifen enthaltenen Messfelder ausgestattet, wobei aber die densitometrischen Messanordnungen nicht querverstellbar sind, so dass die Abtastung von Teststreifen mit zweidimensionaler Messfeldanordnung nur vergleichsweise umständlich durch mehrfaches seitlich versetztes Einführen des Teststreifens möglich ist. Die in diesen Dokumenten gezeigten Streifenlesegeräte sind mittels geeigneter Datenschnittstellen und ein Modem an ein Telefonie-Netzwerk angeschlossen und darüber mit einem entfernten Rechner z.B. einer zentralen Qualitätsüberwachungsstelle verbunden. Der entfernte Rechner kann digitale Messdaten aus dem Streifenlesegerät abrufen oder z.B. Steuerungsbefehle und Nachrichten an das Streifenlesegerät senden, wobei die Steuerungsbefehle entsprechende Funktionen auslösen und Nachrichten beispielsweise auf der Anzeige des Streifenlesegeräts ausgegegeben werden können.

Die US-A-5 233 386 offenbart eine Testvorlage gemäß dem Oberbegrift des Anspruchs 7.

Die bei den bekannten Streifenlesegeräten bisher ausschliesslich eingesetzte densitometrische Auswertung der Teststreifen genügt den gesteigerten Qualitätsansprüchen moderner fotografischer Produktionslinien und des Color Managements nicht mehr in ausreichendem Masse. Durch die vorliegende Erfindung soll daher eine Vorrichtung der gattungsgemässen Art dahingehend verbessert werden, dass eine genauere und zuverlässigere Auswertung der Messfelder der Teststreifen möglich ist, so dass den Anforderungen und Möglichkeiten moderner fotografischer Hochqualitäts-Produktionslinien besser Rechnung getragen wird und die Vorrichtung insbesondere auch im Color Management eingesetzt werden kann.

Die Lösung dieser der Erfindung zugrundeliegenden Aufgabe ergibt sich aus den im kennzeichnenden Teil der unabhängigen Ansprüche 1 und 7 beschriebenen Merkmalen.

Durch die erfindungsgemässe spektrale Ausmessung der Messfelder ist eine genauere und objektivere Beurteilung derselben möglich, was wiederum eine genauere und bessere Einstellung der einzelnen Teile der fotografischen Produktionlinie erlaubt. Insbesondere ist die Vorrichtung auch zum Einsatz für das sog. Color Management geeignet, wo Messstreifen mit sehr vielen Messfeldern (weit über 100) verwendet werden und farbmetrisch mit hoher Präzision ausgemessen werden müssen.

Um auch sehr dichte transparente Vorlagen ausmessen zu können, ist gemäss einem bevorzugten Ausführungsbeispiel eine zusätzliche densitometrische Messanordnung vorgesehen. Durch diese zusätzliche Messanordnung ist die Vorrichtung noch universeller einsetzbar.

Gemäss einer weiteren vorteilhaften Ausgestaltung ist die spektrale Messanordnung bzw. sind die spektrale und die densitometrische Messanordnungen quer zur Bewegungsrichtung der Vorlage verstellbar angeordnet. Dadurch ist eine automatische Ausmessung auch von Vorlagen mit zweidimensionaler Messfeldanordnung möglich.

Weitere besonders vorteilhafte Ausgestaltungen und Weiterbildungen der erfindungsgemässen Vorrichtung sind Gegenstand der abhängigen Ansprüche.

Im folgenden wird die Erfindung anhand der Zeichnung näher erläutert. Es zeigen:
- Fig. 1: einen schematischen Längsschnitt durch die erfindungsgemässe Vorrichtung,
- Fig. 2: einen stark vereinfachten schematischen Querschnitt im wesentlichen entlang der Linie II-II in Fig. 1,
- Fig. 3: eine ebenfalls stark vereinfachte Ansicht nach der Linie III-III der Fig. 2,
- Fig. 4: ein Blockschema der wichtigsten Komponenten der Vorrichtung und ihrer Einbindung in ein Netzwerk und
- Fig. 5: eine beispielsweise Vorlage mit darauf befindlichen Messfeldern.

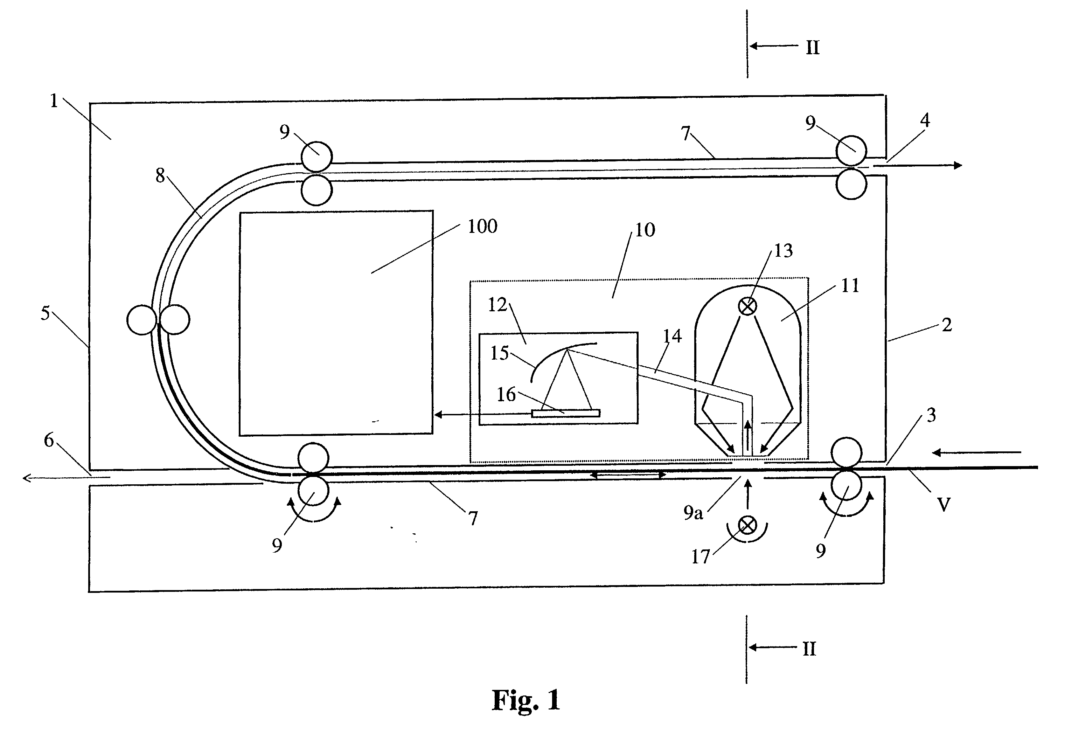

Wie aus der Fig. 1 hervorgeht, umfasst die erfindungsgemässe Vorrichtung ein Gehäuse 1, an dessen Vorderseite 2 eine Einzugöffnung in Form eines Einzugspalts 3 angeordnet ist. Oberhalb des Einzugspalts 3 befindet sich eine erste Ausgabeöffnung in Form eines Ausgabespalts 4. An der Hinterseite 5 des Gehäuses 1 ist eine zweite, ebenfalls spaltförmige Ausgabeöffnung 6 vorgesehen. Zwischen dem Einzugspalt 3 und dem ersten Ausgabespalt 4 befindet sich ein Führungskanal 7 in Form eines liegenden U, welcher einen Transportpfad 8 für eine durch den Einzugspalt 3 in das Gehäuse 1 eingeführte, auszumessende Vorlage V bildet. Entlang des Führungskanals 7 bzw. Transportpfads 8 sind motorisch angetriebene Transportrollenpaare 9 angeordnet, mittels welcher die Vorlage V eingezogen und entlang des Transportpfads in beiden Richtungen bewegt werden kann. Die Transportrollenpaare 9 werden von einer Steuerung 100 gesteuert.

Die auszumessende Vorlage V wird durch den Einzugspalt 3 manuell in das Gehäuse 1 eingeführt und nach erfolgter Ausmessung mittels der Transportrollenpaare 9 durch den ersten Ausgabespalt 4 ausgestossen. Alternativ kann die Vorlage auch durch den Einzugspalt 3 ausgestossen werden, wobei der erste Ausgabespalt 4 dann auch fehlen kann. Falls im praktischen Einsatz hinter dem Gehäuse 1 genügend Platz vorhanden ist, kann die Ausstossung der Vorlage auch durch den hinteren Ausgabespalt 6 erfolgen. Im Gehäuse 1 sind dafür nicht gezeichnete manuell verstellbare Weichenmittel an sich beliebiger Art vorgesehen, welche die Vorlage V entweder entlang des gekrümmten Transportpfads 8 zum vorderen Ausgabespalt 4 oder direkt zum hinteren Ausgabespalt 6 lenken. Anstelle des beispielsweise gezeigten Führungskanals 7 können selbstverständlich auch andere den Transportpfad 8 definierende Führungsmittel vorgesehen sein. Ferner sind wie bei den bekannten Streifenlesegeräten auch geeignete seitliche (in Fig. 1 in Richtung senkrecht zur Zeichenebene wirkende) Führungsorgane vorhanden, welche jedoch der Übersichtlichkeit halber hier nicht dargestellt sind. Diese seitlichen Führungsmittel können vorzugsweise für Vorlagen unterschiedlicher Breite ausgelegt sein, beispielsweise etwa durch die in der US-A-5 519 210 beschriebenen abgestuften Führungsrampen.

In der Fig. 1 sind vier Transportrollenpaare 9 dargestellt. Es versteht sich, dass in der Praxis auch mehr oder weniger Transportrollenpaare vorgesehen sein können. In einer Ausführungsvariante ist die Vorrichtung nur mit einem einzigen Transportrollenpaar ausgestattet, welches unmittelbar hinter einem Abtastfenster 9a des Führungskanals 7 angeordnet ist. Dabei werden Vorlagen V, welche zu kurz für ein Auswerfen durch einen der beiden Ausgabespalte 4 bzw. 6 sind, wieder nach vorne durch den Eingabespalt 3 ausgestossen.

Abgesehen von der U-förmigen Krümmung des Transportpfads 8 entspricht die Vorrichtung hinsichtlich der Führung und des Einzugs bzw. Antriebs der auszumessenden Vorlage im wesentlichen der in US-A-5 519 210 beschriebenen Vorrichtung, so dass der Fachmann diesbezüglich keiner näheren Erläuterung bedarf.

In Einzugsrichtung der Vorlage V knapp hinter dem ersten Transportrollenpaar 9 ist (beim dargestellten Ausführungsbeispiel) im Führungskanal 7 (oder in bzw. zwischen den sonstigen Führungsmitteln) das schon erwähnte Abtastfenster 9a angeordnet, welches sich quer zur Bewegungsrichtung der Vorlage V (senkrecht zur Zeichenebene) erstreckt.

Oberhalb des Führungskanals 7 befindet sich eine Spektralmessanordnung 10, die im wesentlichen aus einem Messkopf 11 und einem Wandlerteil 12 besteht. Der Messkopf 11 umfasst in an sich bekannter Weise eine Lichtquelle 13 und diverse, nicht dargestellte optische Mittel, um das von der Lichtquelle 13 ausgehende Licht ringförmig unter einem genormten Einfallswinkel von ca. 45° auf die Messfelder der unter ihm durchgeführten Vorlage V zu richten. Ferner umfasst der Messkopf weitere optische Mittel, um von einem Messfeld der Vorlage V ausgehendes (remittiertes oder transmittiertes) Messlicht unter einem Winkel von ca. 90° aufzufangen und zum Wandlerteil 12 zu leiten. Die letztgenannten optischen Mittel sind in der Zeichnung durch einen Lichtleiter 14 symbolisiert. Ein besonders zweckmässiger Messkopf dieser Art ist z.B. in der US-A-4 929 084 beschrieben.

Der Wandlerteil 12 ist in an sich bekannter Weise als Diodenzeilenspektrometer ausgebildet und umfasst im wesentlichen ein konkaves Reflexionsbeugungsgitter 15 und ein lineares Feld 16 von fotoempfindlichen Dioden. Das Beugungsgitter 15 spaltet das ihm vom Messkopf 11 über den Lichtleiter 14 zugeführte Messlicht örtlich wellenlängenabhängig auf. Das Fotodiodenfeld 16 wandelt das spektral aufgespaltene Messlicht in entsprechende elektrische Signale um, so dass am Ausgang des Diodenzeilenfelds 16 die Spektralanteile des vom abgetasteten Messfeld auf der Vorlage ausgehenden Messlichts in elektrischer Form vorliegen.

Spektralmessanordnungen dieser und ähnlicher Bauart sind in modernen Spektralfotometern weit verbreitet und z.B. in den Dokumenten US-A-5 040 889, US-A-4 929 084 und EP-B-0 489 286 detailliert beschrieben, so dass der Fachmann diesbezüglich keiner näheren Erläuterung bedarf.

Damit die Spekralmessanordnung 10 auch transparente Vorlagen ausmessen kann, ist gemäss einem vorteilhaften Aspekt der Erfindung unterhalb des Messkopfs 11 in dessen optischer Achse eine weitere Lichtquelle 17 vorgesehen, welche die Vorlage V bzw. die auf ihr befindlichen Messfelder von unten beleuchtet. Das von der transparenten Vorlage V transmittierte Messlicht wird wiederum vom Messkopf 11 aufgefangen und dem Wandlerteil 12 zugeführt. Es versteht sich, dass im Fall von transparenten Vorlagen die Lichtquelle 13 im Messkopf 11 nicht aktiviert ist.

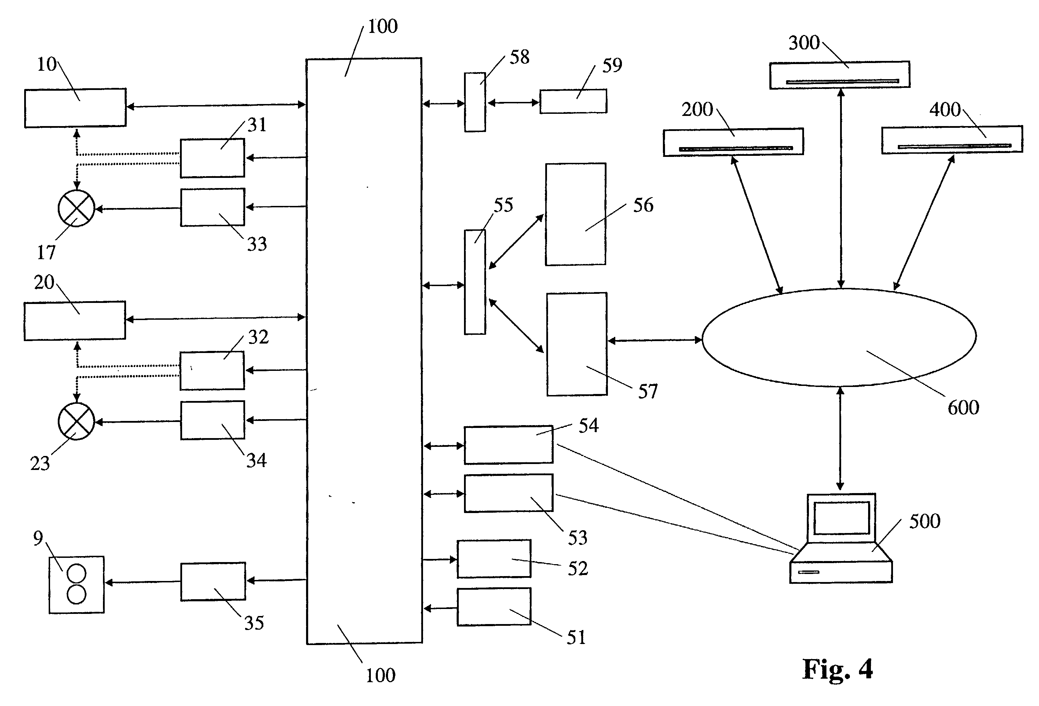

Im Gehäuse 1 ist weiters die schon erwähnte, durch ein digitales Rechnersystem realisierte Steuerung 100 vorgesehen, welche alle Bewegungs- und Funktionsabläufe der Vorrichtung steuert. Insbesondere ist die Steuerung 100 mit dem Wandlerteil 12 bzw. dem in diesem enthaltenen Fotodiodenfeld 16 verbunden, wobei sie die von diesem erzeugten elektrischen Signale in von digitalen Spektralfotometern bekannter Weise in entsprechende digitale Messdaten aufbereitet (vgl. z.B. US-A-5 040 889). Das Zusammenwirken der Steuerung 100 mit den übrigen Komponenten der Vorrichtung ist weiter unten anhand der Fig. 4 näher erläutert.

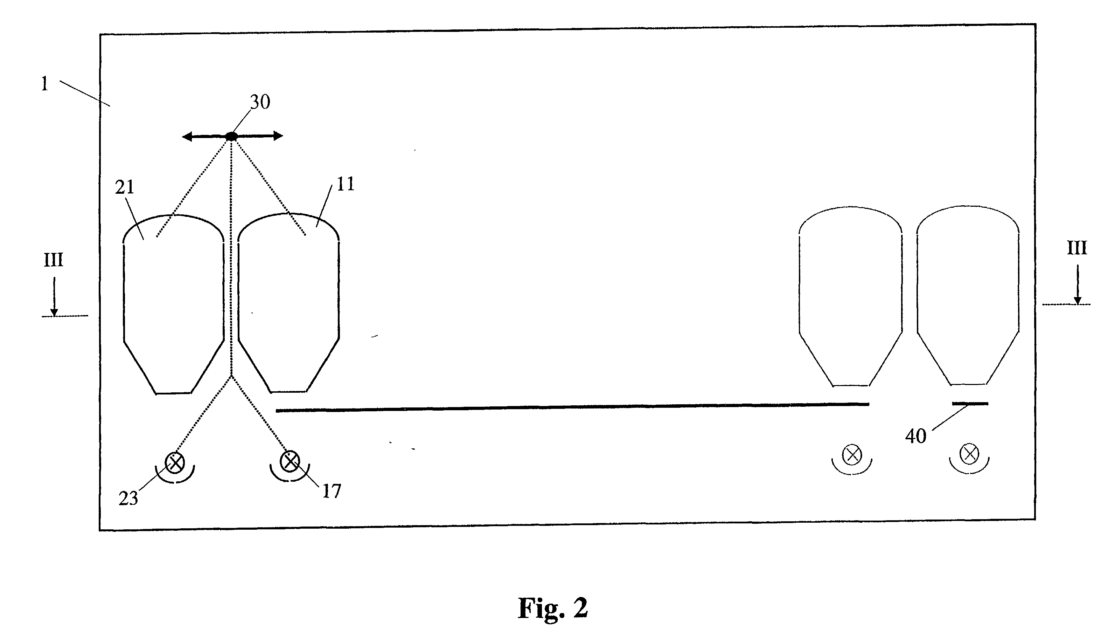

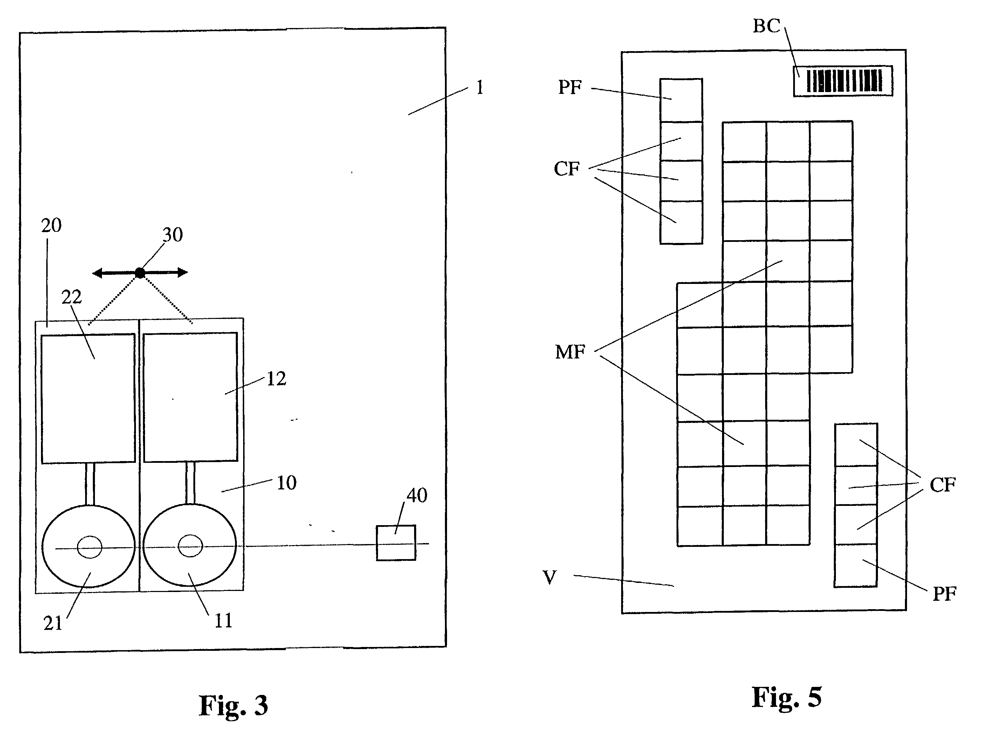

Transparente Vorlagen (Filmstreifen) sind häufig optisch sehr dicht, so dass für eine spektralfotometrische Auswertung nicht ausreichend Licht zur Verfügung steht. Um auch solche dichten Vorlagen ausmessen zu können, ist gemäss einem weiteren wichtigen Aspekt zusätzlich zur Spektralmessanordnung 10 noch eine densitometrische Messanordnung 20 vorgesehen und beispielsweise, wie dies in den Figuren 2 und 3 gezeigt ist, unmittelbar neben der Spektralmessanordnung 10 plaziert.

Die densitometrische Messanordnung 20 ist konventionell aufgebaut, beispielsweise etwa so wie in der US-A-5 519 210 in allen Details beschrieben. Sie besteht aus einem ähnlichen Messkopf 21 wie der der Spektralmessanordnung 10 und einem optisch mit diesem verbundenen Wandlerteil 22, welcher mittels densitometrischer Filter und fotoelektrischer Wandler elektrische Signale erzeugt, die den Intensitäten oder Dichten des von der Vorlage ausgehenden Messlichts in den drei klassischen Spektralbereichen rot, blau und grün entsprechen. Der Wandlerteil 22 kann auch direkt innerhalb des Messkopfs 21 angeordnet sein. Für die densitometrische Transmissionsmessung ist wie bei der Spektralmessanordnung 10 unterhalb des Messkopfs 21 eine Lichtquelle 23 angeordnet, welche die Vorlage V von unten beleuchtet. Falls mit der densitometrischen Messanordnung 20 nur im Durchlicht gemessen werden soll, kann die Lichtquelle im Messkopf 21 natürlich entfallen. Die densitometrische Messanordnung 20 ist wie die Spektralmessanordnung 10 mit der Steuerung 100 verbunden, wobei letztere die vom Wandlerteil 22 erzeugten elektrischen Signale in an sich bekannter Weise in entsprechende, die densitometrischen Farbdichten der abgetasteten Messfelder auf der Vorlage repräsentierende digitale Messdaten aufbereitet.

Film- und Papierchemie-Streifen und insbesondere die im Color Management eingesetzten Messstreifen besitzen häufig eine zweidimensionale Anordnung von Messfeldern. Um auch solche Vorlagen ohne umständliche Manipulation automatisch ausmessen zu können, sind die beiden Messanordnungen 10 und 20 gemäss einem weiteren wichtigen Aspekt der Erfindung quer zur Transportrichtung der Vorlage V (in Fig. 1 also senkrecht zur Zeichenebene) motorisch verstellbar. Diese Verstellbarkeit bzw. die dazu erforderlichen Verstellmittel sind in den Figuren 2 und 3 durch einen Doppelpfeil 30 symbolisiert. Die Lichtquellen 17 und 23 sind dabei selbstverständlich zusammen mit den Messanordnungen ebenfalls verstellbar, so dass die relativen Lagen der Lichtquellen zu den ihnen zugeordneten Messköpfen erhalten bleiben.

Die Verstellung der Messanordnungen 10 und 20 sowie der zugehörigen Lichtquellen 17 und 23 erfolgt durch zwei motorische Antriebe 31 und 32 (Fig. 4) unter der Kontrolle der Steuerung 100. Selbstverständlich könnten auch vier unabhängige Antriebe oder auch nur ein einziger gemeinsamer Antrieb zusammen mit einer entsprechenden kinematischen Kopplung der zu bewegenden Teile vorgesehen sein.

Gemäss einem weiteren wichtigen Aspekt der Erfindung ist die Vorrichtung mit einem integrierten Weissreferenzfeld 40 ausgestattet, welches in der Nähe des in den Figuren 2 und 3 rechten Endes der Bewegungsbahn der Messanordnungen 10 und 20 in der Vorlagenebene angeordnet ist. Dieses Weissreferenzfeld 40 wird in bestimmten Zeitintervallen oder z.B. nach jeder Ausmessung einer Vorlage von der Spektralmessanordnung 10 angefahren und ausgemessen. Anhand der dabei gewonnenen (spektralen) digitalen Messdaten kann dann die Steuerung 100 in an sich bekannter Weise, beispielsweise etwa so wie in der EP-A-0 878 704 beschrieben, eine automatische Weiss-Kalibrierung vornehmen. Gegebenenfalls kann das Weissreferenzfeld 40 auch für die Kalibrierung der densitometrischen Messanordnung herangezogen werden. Anstelle des einzigen Weissreferenzfelds 40 können auch mehrere Referenzfelder unterschiedlicher Farb- bzw. Grauwerte zur Kalibrierung vorgesehen sein, wie dies ebenfalls in der genannten EP-A-0 878 704 näher beschrieben ist.

Die Fig. 4 zeigt in Form eines Blockschemas die Zusammenschaltung der bereits erwähnten Teile der Vorrichtung mit der Steuerung 100 sowie diverse weitere Komponenten. Die Spektralmessanordnung 10 und die densitometrische Messanordnung 20 sind direkt mit der Steuerung 100 verbunden, wobei die erforderlichen analogen Signalverstärker in üblicher Weise in den Wandlerteilen enthalten aber nicht dargestellt sind. Die Analog/Digital-Wandlung erfolgt in der Steuerung 100. Die beiden Lichtquellen 17 und 23 werden von der Steuerung 100 über entsprechende Lampentreiber 33 und 34 angesteuert. Die motorischen Antriebe 31 und 32 werden ebenfalls über (nicht gezeigte Treiberstufen) von der Steuerung 100 angesteuert. Die untereinander z.B. durch einen Treibriemen kinematisch gekoppelten Transportrollenpaare 9 für den Vorschub der auszumessenden Vorlage werden von einem Motor 35 angetrieben, der seinerseits über eine nicht gezeigte Treiberstufe von der Steuerung 100 gesteuert wird.

Die Vorrichtung kann ferner eine Bedienungstastatur 51 und eine optische Anzeigeeinrichtung 52 aufweisen, welche mit der Steuerung 100 in an sich bekannter Weise zusammenwirken. Die Bedienungstastatur und die Anzeigeeinrichtung können z.B. bei als Einbaugerät ausgebildeter Vorrichtung auch entfallen.

Ferner ist die Vorrichtung mit einer seriellen bi-direktionalen Datenschnittstelle 53 und/oder mit einer USB-Schnittstelle 54 versehen, die mit der Steuerung 100 verbunden sind und in an sich bekannter Weise die Kommunikation der Vorrichtung bzw. ihrer Steuerung 100 mit z.B. einem externen Rechner 500 ermöglichen. Über diese Schnittstellen können in an sich bekannter Weise (beispielsweise wie in US-A-5 402 361 beschrieben) digitale Messdaten an den externen Rechner übermittelt werden. Ferner kann über diese Schnittstellen auch eine Steuerung der Vorrichtung von diesem externen Rechner aus erfolgen. Die dafür erforderliche Programmierung ist an sich z.B. von modernen digitalen Spektralfotometern bekannt und bedarf deshalb keiner näheren Erläuterung.

Weiters weist die Vorrichtung einen Erweiterungsanschluss 55 für eine Netzwerkschnittstelle 56 oder ein Modem 57 sowie einen Anschluss 58 für einen Balkencode-Leser 59 auf. Mit dem Balkencode-Leser können ggf. auf der Vorlage V in Form eines Balkencodes BC vorgesehene Daten (Fig. 5) in die Steuerung 100 eingelesen werden.

Die Netzwerkschnittstelle 56 und das Modem 57 sind vorzugsweise als optionale Module ausgebildet, welche wahlweise an die Vorrichtung angeschlossen werden können. Selbstverständlich können die Netzwerkschnittstelle 56 und/oder das Modem 57 auch fest in die Vorrichtung eingebaut sein.

Die Netzwerkschnittstelle 56 (z.B. Ethernet) erlaubt den Anschluss der Vorrichtung an ein Datennetzwerk und über dieses die Verbindung mit z.B. einem externen Rechner. Mittels des Modems 57 kann über das öffentliche Telefon-Netz entweder direkt oder über das Internet 600 eine Verbindung zu einem externen Rechner 500 hergestellt werden und umgekehrt. Voraussetzung ist natürlich, dass der externe Rechner 500 ebenfalls mit entsprechenden Kommunikations-Schnittstellen ausgestattet ist. Der externe Rechner 500 kann z.B. zu einer zentralen Qualitätsüberwachungsstelle gehören, in der die von der erfindungsgemässen Vorrichtung erzeugten digitalen Messdaten ausgewertet werden. Dabei können selbstverständlich auch weitere erfindungsgemässe Vorrichtungen 200, 300, 400 über das Internet 600 (oder das Telefon-Netz) mit dem Rechner 500 verbunden sein. Selbstverständlich ist der Zugriff auf das Internet gegebenenfalls auch über die Netzwerkschnittstelle 56 möglich, wenn das Netzwerk eine Internet-Verbindung aufweist. Die für die Datenkommunikation über ein Datennetzwerk und das Internet erforderliche Software (Programmierung der Steuerung 100) ist dem Fachmann bekannt und bedarf deshalb keiner näheren Erläuterung.

Die die eigentliche Ausmessung der Vorlage betreffenden Funktionsabläufe sind im wesentlichen gleich wie z.B. bei der aus der US-A-5 519 210 bekannten Vorrichtung.

In der Steuerung 100 sind die Messfeldanordnungen auf der Vorlage für die gängigsten Vorlagetypen in geeigneter Weise in Zuordnung zu einer Bezeichnung bzw. einem Code für den jeweiligen Vorlagentyp gespeichert. Die die Messfeldanordnungen beschreibenden Daten werden in der Folge als (Vorlage-)Konfigurationsdaten bezeichnet.

Bevor die Ausmessung der Vorlage beginnen kann, muss z.B. mittels der Tastatur 51 der entsprechende Vorlagetyp ausgewählt bzw. eingestellt werden. Gemäss einer besonders vorteilhaften Ausführungsform der erfindungsgemässen Vorrichtung kann diese Auswahl auch automatisch durch Abtasten eines auf der Vorlage befindlichen Vorlagetyp-Codes erfolgen. Diese Variante ist weiter unten noch näher erläutert. Ferner muss der Steuerung z.B. mittels der Tastatur 51 mitgeteilt werden, ob es sich um eine opake oder eine transparente Vorlage handelt. Auch dies kann z.B. mittels an sich bekannter Sensoren automatisch festgestellt werden. Schliesslich ist noch zu entscheiden und einzustellen, ob die Ausmessung spektral oder densitometrisch erfolgen soll. Diese Einstellung kann erfindungsgemäss z.B. durch Ausmessen wenigstens eines Messfelds und anhand der dabei ermittelten Messdaten z.B. in Verbindung mit einem Dichtekriterium ebenfalls automatisch durch die Steuerung 100 erfolgen.

Für die Messung wird die Vorlage V in den Einzugspalt 3 soweit eingeschoben, bis sie vom ersten Transportrollenpaar 9 erfasst und dann automatisch gesteuert weitertransportiert wird. Gegebenenfalls werden nun zuerst die genannten, für die Erkennung des Vorlagentyps, der Unterscheidung zwischen opak und transparent und der Entscheidung zwischen spektraler oder densitometrischer Messung erforderlichen Messungen durchgeführt und die Steuerung 100 entsprechend vorbereitet. Alternativ können diese vorbereitenden Einstellungen wie z.B. bei der US-A-5 519 210 von Hand über die Tastatur 51 eingegeben werden.

Als erstes verfährt nun die Steuerung 100 anhand des Vorlagetyps und der zu diesem gehörenden Konfigurationsdaten die passende Messanordnung 10 bzw. 20 seitlich in eine Position, bei der sich der Messkopf 11 bzw. 21 (und die Lichtquelle 17 bzw. 23) über der ersten Messfeldkolonne auf der Vorlage V befindet. Nun wird die Vorlage solange weiter einwärts transportiert, bis alle Messfelder dieser ersten Kolonne ausgemessen sind. Daraufhin wird die Messanordnung anhand der Vorlagen-Konfigurationsdaten auf die nächste Messfeldkolonne verfahren und die Vorlage in umgekehrter Richtung transportiert, bis auch diese Kolonne vollständig ausgemessen ist. Dieses Prozedere wird solange fortgesetzt, bis alle Messfelder der Vorlage ausgemessen sind. Die dabei gewonnenen digitalen Messdaten werden in der Steuerung 100 für die weitere (interne oder externe) Verarbeitung zwischengespeichert. Anschliessend wird die Vorlage wie eingangs beschrieben durch einen der Ausgabespalte 4 bzw. 6 oder auch durch den Einzugspalt 3 wieder ausgestossen. Die gewonnenen digitalen Messdaten können in geeigneter Weise auf der optischen Anzeigeeinrichtung 52 dargestellt werden. Vorzugsweise werden die Daten jedoch über eine der Kommunikationsschnittstellen an den externen Rechner übertragen, wo die eigentliche Auswertung der Daten stattfindet. Näheres dazu ist weiter unten beschrieben.

In Fig. 5 ist eine beispielsweise Vorlage V dargestellt, welche gegenüber herkömmlichen Film- und Papierteststreifen einige Besonderheiten aufweist und für die gesonderter Schutz beansprucht wird.

Im mittleren Bereich weist die Vorlage V eine zweidimensionale Anordnung von Messfeldern MF auf, die dem Verwendungszweck der Vorlage angepasst sind. Beispiele für typische Messfelder sind in den schon eingangs genannten Dokumenten US-A-5 118 183 und US-A-5 402 361 gezeigt. Die Art der Messfelder und ihre Anordnung auf der Vorlage sind dem jeweiligen Vorlagentyp eigen.

In zwei diametral gegenüberliegenden Eckbereichen sind (im gezeigten Beispiel) jeweils vier in Längsrichtung der Vorlage V hintereinander liegende Spezial-Messfelder angeordnet, von denen das jeweils randnächste ein Lage-Feld PF und die drei anderen jeweils ein Code-Feld CF darstellen. Als Codier-Information wird die Farbe der Felder verwendet, wobei man sich vorzugsweise auf die Grundfarben rot, blau und grün beschränkt.

Die Lage-Felder PF weisen unterschiedliche Farben auf. Wenn die Vorlage V in die Vorrichtung eingeführt wird, wird das Lage-Feld als erstes Feld ausgemessen und in der Steuerung anhand der Messdaten seine Farbe bestimmt. Die Steuerung 100 kann dann anhand der Farbe feststellen, ob die Vorlage V mit ihrer Vorderkante (in der Zeichnung oben) oder mit ihrer Hinterkante (in der Zeichnung unten) in die Vorrichtung eingeführt wurde.

Die drei übrigen Code-Felder CF bilden durch die Kombination ihrer Farben jeweils einen Vorlagetyp-Code. Bei Beschränkung auf drei Farben pro Code-Feld kann mit drei Code-Feldern CF zwischen 27 verschiedenen Vorlagetypen unterschieden werden. Falls mehr Vorlagetypen möglich sein sollen, müssen entsprechend mehr Code-Felder CF vorgesehen oder mehr (vorzugsweise auch visuell zuverlässig unterscheidbare) Farben pro Feld zugelassen werden.

In der Steuerung 100 sind, wie schon erwähnt, die verschiedenen Vorlagetyp-Codes in Zuordnung zu entsprechenden Konfigurationsdaten, welche die Anordnungen der Messfelder MF auf der Vorlage repräsentieren, gespeichert. Selbstverständlich sind auch die (vordefinierten) Positionen der Lage-Felder PF und der Code-Felder CF in der Steuerung gespeichert. Wenn die Vorlage V in die Vorrichtung eingeführt wird, wird zuerst die Spektralmessanordnung 10 (oder alternativ auch die densitometrische Messanordnung 20) seitlich in eine solche Position verfahren, dass sie das Lage-Feld LF und die Code-Felder CF abtasten kann. Anhand der dabei gewonnenen Messdaten werden die Farben dieser abgetasteten Felder bestimmt und daraus der Lage-Code und der Vorlagetyp-Code ermittelt. Anhand des Vorlagetyp-Codes werden dann die zum betreffenden Vorlagetyp gehörenden Konfigurationsdaten (Anordnungen der Messfelder MF) aus dem Speicher ausgewählt bzw. abgerufen, wobei die aus dem Lage-Code ermittelte Einführlage (Vorder- oder Hinterkante) entsprechend berücksichtigt wird. Nun sind der Steuerung die Positionen der auszumessenden Messfelder MF auf der Vorlage V bekannt, so dass die Messfelder MF der Reihe nach angefahren und ausgemessen werden können.

Der Vorteil der Codierung des Vorlagentyps direkt auf der Vorlage selbst liegt darin, dass der Vorlagentyp der Vorrichtung nicht mitgeteilt werden muss (z.B. über die Tastatur), so dass sich das Handling vereinfacht und Eingabefehler vermieden werden. Der Lage-Code vereinfacht das Handling ebenfalls, da nun nicht mehr darauf geachtet werden muss, dass die Vorlage in der richtigen Richtung in die Vorrichtung eingeführt wird.

Wird die Vorrichtung für die Ausmessung von in verschiedenen Produktionslinien benutzten Vorlagen eingesetzt, so müssen die Messresultate jeweils der richtigen Produktionslinie zugeordnet werden. Dies kann z.B. durch manuelle Eingabe eines entsprechenden Vorlageidentifikationscodes erfolgen, welcher in der Steuerung 100 dann den Messdaten der betreffenden Vorlage in Form entsprechender Vorlageidentifikationsdaten zugeordnet wird. Gemäss einem weiteren wichtigen Aspekt der Erfindung kann dieser Vorlageidentifikationscode aber auch direkt auf der Vorlage selbst vorgesehen und automatisch von der Vorlage eingelesen werden.

Für vorbelichtete Vorlagen zur Überprüfung der chemischen Behandlungsbäder wird der Code vorzugsweise in Form eines Balken-Codes BC auf der Vorlage angebracht. Der Balkencode kann dabei z.B. auf einem Etikett aufgedruckt sein, welches an geeigneter Stelle auf die Vorlage geklebt wird. Dieser Vorlageidentifikationscode kann dann mittels des schon erwähnten Balkencode-Lesers 59 in die Steuerung eingelesen werden.

Bei Vorlagen, welche für die Überprüfung eines Printers in diesem belichtet werden, wird der Vorlageidentifikationscode vorzugsweise direkt im Printer auf die Vorlage aufbelichtet werden. Der Printer muss natürlich dazu in der Lage sein, was aber bei modernen digitalen Printern der Fall ist. Der aufbelichtete Code kann gleich wie der Vorlagetyp-Code durch eine Anzahl von farbigen Codefeldern CF gebildet sein und sich z.B. in einer Reihe mit dem Vorlagetyp-Code auf der Vorlage befinden. Beim Einführen der Vorlage V in die Vorrichtung wird dann der Vorlageidentifikationscode in gleicher Weise wie der Vorlagetypcode in die Steuerung 100 eingelesen, wobei diese dann anhand des Vorlageidentifikationscodes entsprechende Vorlageidentifikations-Daten bildet und den anschliessend ermittelten digitalen Messdaten der ausgemessenen Vorlage zuordnet.

Bei den in den eingangs angeführten Dokumenten US-A-5 519 210 und US-A-5 118 183 beschriebenen bekannten Vorrichtungen werden die digitalen Messdaten der ausgemessenen Vorlagen an einen externen Rechner übertragen, wobei dieser Rechner auch entfernt angeordnet sein kann und dann über das Telefonnetz mit der Vorrichtung verbunden ist. Die Übertragung der Daten erfolgt entweder auf Veranlassung der Vorrichtung oder auf Veranlassung des externen Rechners. Dieses Verfahren hat den Nachteil, dass zwischen der Vorrichtung und dem externen Rechner ständig eine Kommunikationsverbindung bestehen muss.

Gemäss einem weiteren wichtigen Aspekt der Erfindung ist die Vorrichtung dazu ausgebildet, auf das Internet zuzugreifen und die digitalen Messdaten im Internet abzulegen. Dies kann z.B. mittels des bekannten FTP (File Transfer Protocol) erfolgen, geschieht aber vorzugsweise via E-Mail. Die Messdaten werden dazu zusammen mit den Vorlagenidentifikationsdaten als Daten-File im international standardisierten Format IT8 aufbereitet und dieses Daten-File wird als Anhang an eine E-Mail-Nachricht an eine dafür vorgesehene E-Mail-Adresse verschickt. Von dort können die Daten dann vom externen Rechner zu einem beliebigen Zeitpunkt abgeholt werden. Umgekehrt kann der externe Rechner auch ein für die Vorrichtung bestimmtes E-Mail im Internet hinterlegen, und die Vorrichtung kann dieses E-Mail dann zu einem gegebenen Zeitpunkt aus dem E-Mail abholen. Auf diese Weise können der Vorrichtung vom externen Rechner z.B. Nachrichten geschickt werden , die auf der Anzeigeeinrichtung der Vorrichtung optisch dargestellt werden können. Ferner können auch Steuerungs- und Konfigurationsdaten für die Vorrichtung in diese überspielt werden. Die in der Steuerung gespeicherte und ablaufende, für die E-Mail-Kommunikation erforderliche Software ist heute Standard und bedarf für den Fachmann keiner Erläuterung.

## Patentansprüche

1. Vorrichtung zur automatischen fotoelektrischen Ausmessung von auf einer blatt- oder streifenförmigen, opaken oder transparenten Vorlage vorhandenen Messfeldern, umfassend ein Gehäuse (1) mit einer vorzugsweise spaltförmigen Einzugöffnung (3) für die Vorlage (V), Transportmittel (9) für den automatischen Einzug der Vorlage in das Gehäuse und den Transport der Vorlage entlang eines Transportpfads (8), einen im Bereich des Transportpfads (8) angeordneten Messkopf (11) einer fotoelektrischen Messanordnung (10), welche die auf der Vorlage (V) vorhandenen Messfelder (MF) mit Licht definierter Qualität beaufschlagt und abhängig von der Vorlage das von den Messfeldern remittierte oder das von den Messfeldern transmittierte Messlicht empfängt und in die Farbeigenschaften der Messfelder repräsentierende elektrische Signale umwandelt, und eine mit den Transportmitteln (9) und der Messanordnung (10) zusammenwirkende Steuerung (100), welche den Einzug und den Transport der Vorlage (V) steuert und die von der Messanordnung (10) erzeugten elektrischen Signale in digitale Messdaten aufbereitet und an einer Schnittstelle (53) zur weiteren Verarbeitung in einem externen Rechner (500) zur Verfügung stellt, **dadurch gekennzeichnet, dass** in der Steuerung (100) für eine Anzahl von verschiedenen Vorlagetypen die Anordnung der Messfelder (MF) auf der Vorlage (V) repräsentierende Konfigurationsdaten gespeichert sind und dass die Steuerung (100) dazu ausgebildet ist, einen auf der Vorlage (V) enthaltenen, durch die Farben von definierten Code-Feldern (CF) gebildeten Vorlagetyp-Code aus den von diesen Code-Feldern (CF) erzeugten digitalen Messdaten zu erkennen, aus dem erkannten Vorlagetyp-Code die gespeicherten Konfigurationsdaten des zu diesem Vorlagetyp-Code gehörenden Vorlagetyps auszuwählen und die Ausmessung der einzelnen Messfelder (MF) der Vorlage (V) anhand der ausgewählten Konfigurationsdaten zu steuern, und dass die Steuerung dazu ausgebildet ist, anhand der Farbe von auf der Vorlage enthaltenen Lage-Feldern (PF) festzustellen, ob die Vorlage (V) mit ihrer Vorderkante oder mit ihrer Hinterkante in die Vorrichtung eingeführt wurde.

2. Vorrichtung nach Anspruch 1, **dadurch gekennzeichnet, dass** die Steuerung (100) dazu ausgebildet ist, einen auf der Vorlage (V) enthaltenen, durch die Farben von definierten Code-Feldern (CF) gebildeten Vorlageidentifikations-Code aus den von diesen Code-Feldern (CF) erzeugten digitalen Messdaten zu erkennen und daraus entsprechende digitale Vorlageidentifikations-Daten zu bilden und den digitalen Messdaten der betreffenden Vorlage zuzuordnen.

3. Vorrichtung nach Anspruch 1, **dadurch gekennzeichnet, dass** die Steuerung (100) dazu ausgebildet ist, einen durch die Farben der Lage-Felder (PF) gebildeten Lage-Code aus den von diesen Lage-Feldern (PF) erzeugten digitalen Messdaten zu erkennen und die Ausmessung der einzelnen Messfelder (MF) der Vorlage (V) anhand des Lage-Codes zu steuern.

4. Vorrichtung nach Anspruch 1, **dadurch gekennzeichnet, dass** ein mit der Steuerung (100) verbindbarer und mit dieser zusammenwirkender Balkencode-Leser (59) vorgesehen ist, welcher einen auf der Vorlage (V) vorgesehenen, als Balkencode (BC) ausgebildeten Vorlagenidentifikations-Code in die Steuerung (100) einlesen kann, und dass die Steuerung (100) dazu ausgebildet ist, den eingelesenen Vorlagenidentifikations-Code oder daraus abgeleitete digitale Vorlageidentifikations-Daten den digitalen Messdaten der betreffenden Vorlage (V) zuzuordnen.

5. Vorrichtung nach einem der Ansprüche 1 bis 4, **dadurch gekennzeichnet, dass** die Messanordnung als Spektralmessanordnung (10) ausgebildet ist, wobei die von der Spektralmessanordnung erzeugten elektrischen Signale die Spektren der ausgemessenen Messfelder (MF) auf der Vorlage (V) repräsentieren.

6. Vorrichtung nach einem der Ansprüche 1 bis 5, **dadurch gekennzeichnet, dass** zusätzlich insbesondere eine densitometrische Messanordnung (20) vorgesehen ist, welche ebenfalls mit der Steuerung (100) zusammenarbeitet und elektrische Signale erzeugt, die die Farbdichten der ausgemessenen Messfelder (MF) in wenigstens den Farben rot, blau und grün repräsentieren.

7. Testvorlage für die Überprüfung der Einstellungen einer fotografischen Produktionsanlage mit einer Anzahl von für den jeweiligen Verwendungszweck ausgebildeten Messfeldern, wobei die Vorlage zusätzlich mit einem maschinenlesbaren, vorzugsweise durch ein oder mehrere farbige Codefelder (CF) gebildeten Code versehen ist, welcher eine Information über den Typ der Vorlage und/oder eine Information über die Produktionsanlage, in der die Vorlage verwendet wird, enthält, **dadurch gekennzeichnet, dass** zusätzlich ein durch ein oder mehrere farbige Codefelder (PF) gebildeter Lage-Code vorgesehen ist, anhand dessen maschinell erkennbar ist, ob die Vorlage (V) beim Einführen in ein für die Ausmessung der Messfelder geeignetes Messgerät mit ihrer Vorderkante oder ihrer Hinterkante eingeführt wurde.

8. Testvorlage nach Anspruch 7, **dadurch gekennzeichnet, dass** sie einen Balkencode (BC) aufweist, welcher eine Information über die Produktionsanlage, in der die Vorlage verwendet wird, enthält.

## Claims

1. Apparatus for the automatic photoelectric measurement of measurement fields present on a sheet-shaped or strip-shaped, opaque or transparent original master, comprising a housing (1) with a preferably slot-shaped draw-in opening (3) for the original master (V), means of transport (9) to automatically pull the original master into the housing and to transport the original master along a transport pathway (8), a measurement head (11) of a photoelectric measurement device (10) arranged in the region of the transport pathway (8) that exposes the measurement fields (MF) present on the original master (V) to light of a defined quality and, depending on the original master, receives the measurement light diffusely reflected by the measurement fields or transmitted by the measurement fields and converts it into electrical signals representing the colour properties of the measurement fields, and a controller (100) operating in conjunction with the means of transport (9) and the measuring arrangement (10) that controls the pulling in and transport of the original master (V) and processes the electrical signals generated by the measuring device (10) to yield digital measurement data and makes this available at an interface (53) for further processing in an external computer (500), **characterized in that** configuration data representing the arrangement of the measurement fields (MF) on the original master (V) for a number of different original master types are stored in the controller (100) and **in that** the controller (100) is constructed so as to be able to recognise an original master type code contained on the original master (V) and formed by the colours of defined code fields (CF), from the digital measurement data generated by these code fields (CF), so as to be able to select, from the original master type code that is recognised, the stored configuration data of the original master type belonging to this original master type code, and so as to be able to control the measurement of the individual measurement fields (MF) of the original master (V) based on the selected configuration data, and **in that** the controller is constructed so as to be able to ascertain, based on the colour of position fields contained on the original master, whether the original master (V) was inserted into the apparatus by its front edge or by its rear edge.

2. Apparatus according to Claim 1, **characterized in that** the controller (100) is constructed so as to be able to recognise an original master identification code contained on the original master (V) and formed by the colours of defined code fields (CF), from the digital measurement data generated by these code fields (CF), and to construct corresponding digital original master identification data therefrom and to assign the digital measurement data of the respective original master.

3. Apparatus according to Claim 1, **characterized in that** the controller (100) is constructed so as to be able to recognise a position code formed by the colours of the position fields (PF) from the digital measurement data generated from these position fields (PF) and to control the measurement of the individual measurement fields (MF) of the original master (V) based on the position code.

4. Apparatus according to Claim 1, **characterized in that** there is provided a bar-code reader (59) that can be connected to the controller (100) and operates in conjunction with the latter, which can read into the controller (100) an original master identification code provided on the original master (V) and constructed in the form of a bar-code (BC), and **in that** the controller (100) is constructed so as to be able to assign the original master identification code that is read in, or the digital original master identification data derived therefrom, to the digital measurement data of the respective original master (V).

5. Apparatus according to one of the Claims 1 to 4, **characterized in that** the measurement device is constructed as a spectral measuring arrangement (10), whereby the electrical signals generated by the spectral measuring arrangement represent the spectra of the measured measurement fields (MF) on the original master (V).

6. Apparatus according to one of the Claims 1 to 5, **characterized in that** there is provided in addition in particular a densitometric measuring arrangement (20) that also operates in conjunction with the controller (100) and generates electrical signals that represent the colour densities of the measured measurement fields (MF) in at least the colours red, blue and green.

7. Test original master to check the settings of a photographic production installation with a plurality of measurement fields configured for the respective intended purpose, whereby the original master is additionally equipped with a machine-readable code, preferably formed from one or more coloured code fields (CF), that contains information about the type of original master and/or information about the production installation in which the original master is used, **characterized in that** there is additionally provided a position code, formed by one or more coloured code fields (PF), on the basis of which it is possible to recognise mechanically whether the original master (V) was inserted by its front edge or by its rear edge when being inserted into a measuring instrument suitable for the measurement of the measurement fields.

8. Test original master according to Claim 7, **characterized in that** it has a bar-code (BC) that contains information about the production installation in which the original master is used.

## Revendications

1. Dispositif pour la mesure photoélectrique automatique de champs de mesure, existant sur un document opaque ou transparent, sous forme de feuille ou de bande, comprenant un boîtier (1), avec une ouverture d'introduction (3), de préférence en forme de fente, pour le document (V), des moyens de convoyage (9) pour l'introduction automatique du document dans le boîtier et le convoyage du document le long d'un trajet de convoyage (8), une tête de mesure (11), disposée dans la zone du trajet de convoyage (8), d'un agencement de mesure photoélectrique (10), qui alimente les champs de mesure (MF), existant sur le document (V), avec une lumière de qualité définie et reçoit, en fonction du document, la lumière de mesure, renvoyée par les champs de mesure ou la lumière de mesure, transmise par les champs de mesure et la convertit en signaux électriques, qui représentent les propriétés de couleur des champs de mesure et une commande (100), qui coopère avec les moyens de convoyage (9) et l'agencement de mesure (10), qui commande l'introduction et le convoyage du document (V) et édite les signaux électriques, produits par l'agencement de mesure (10) en données de mesure numériques et les met à disposition sur une interface (53) en vue du traitement ultérieur dans un calculateur externe (500), **caractérisé en ce que** dans la commande (100), les données de configuration, qui représentent l'agencement des champs de mesure (MF) sur le document (V), sont enregistrées pour un certain nombre de types de documents différents et que la commande (100) est constituée, pour reconnaître un code de type de document, contenu sur le document (V), formé par les couleurs de champs de code (CF) définis, parmi les données de mesure numériques, produites par ces champs de code (CV), pour sélectionner, à partir du code de type de document reconnu, les données de configuration enregistrées du type de document, qui fait partie de ce code de type de document et pour commander la mesure des champs de mesure (MF) individuels du document (V) à l'aide des données de configuration sélectionnées et que la commande est constituée, pour déterminer, à l'aide de la couleur de champs de position (PF), contenus sur le document, si le document (V) a été inséré dans le dispositif avec son bord avant ou avec son bord arrière.

2. Dispositif selon la revendication 1, **caractérisé en ce que** la commande (100) est constituée, pour reconnaître un code d'identification de document, contenu sur le document (V), formé, grâce aux couleurs, par des champs de code (CF) définis, à partir des données de mesure numériques, produites par ces champs de code (CF) et pour composer, à partir de là, des données d'identification de document numériques correspondantes et les affecter aux données de mesure numériques du document concerné.

3. Dispositif selon la revendication 1, **caractérisé en ce que** la commande (100) est constituée, pour reconnaître un code de position, formé par les couleurs des champs de position (PF), à partir des données de mesure numériques, produites par ces champs de position (PF) et pour commander la mesure des champs de mesure individuels (MF) du document (V) à l'aide du code de position.

4. Dispositif selon la revendication 1, **caractérisé en ce qu'**il est prévu un lecteur de codes à barres (59), qui peut être relié à la commande (100) et coopère avec celle-ci, lecteur qui peut lire, dans la commande (100), un code d'identification de document, constitué en tant que code à barres (BC), prévu sur le document (V) et que la commande (100) est constituée, pour affecter le code d'identification de document lu ou les données d'identification de document numériques, qui en découlent, aux données de mesure numériques du document (V) concerné.

5. Dispositif selon l'une des revendications 1 à 4, **caractérisé en ce que** l'agencement de mesure est constitué en tant qu'agencement de mesure spectrale (10), les signaux électriques, produites par l'agencement de mesure spectrale, représentant les spectres des champs de mesure mesurés (MF) sur le document (V).

6. Dispositif selon l'une des revendications 1 à 5, **caractérisé en ce qu'**il est prévu en plus, en particulier un agencement de mesure densitométrique (20), qui coopère également avec la commande (100) et produit des signaux électriques, qui représentent les puretés colorimétriques des champs de mesure mesurés (MF) dans au moins les couleurs rouge, bleue et verte.

7. Document d'essai pour la vérification des réglages d'une installation de production photographique, avec un certain nombre de champs de mesure, constitués pour l'affectation respective, le document étant muni en plus d'un code, lisible par ordinateur, de préférence formé par un ou plusieurs champs de code de couleur (CF), code qui contient une information sur le type du document et / ou une information sur l'installation de production, dans laquelle sera utilisé le document, **caractérisé en ce qu'**il est prévu en plus, un code de position, formé par un ou plusieurs champs de code de couleur (PF), code à l'aide duquel un ordinateur peut reconnaître si le document (V) a été inséré avec son bord avant ou son bord arrière, lors de l'insertion dans un appareil de mesure, convenant pour la mesure des champs de mesure.

8. Document d'essai selon la revendication 7, **caractérisé en ce qu'**il présente un code à barres (BC), qui contient une information sur l'installation de production, dans laquelle sera utilisé le document.
